Europäisches Patentamt

European Patent Office

Office européen des brevets

(11) Publication number: **0 097 998**
**B1**

(12) EUROPEAN PATENT SPECIFICATION

(45) Date of publication of patent specification: **09.04.86**

(21) Application number: **83200896.5**

(22) Date of filing: **20.06.83**

(51) Int. Cl.⁴: **B 23 K 11/32**

(54) Method of securing two parts to each other.

(30) Priority: **28.06.82 NL 8202597**

(43) Date of publication of application:
**11.01.84 Bulletin 84/02**

(45) Publication of the grant of the patent:
**09.04.86 Bulletin 86/15**

(84) Designated Contracting States:
**AT CH DE FR GB LI**

(56) References cited:
**DE-A-1 805 361**
**DE-A-1 807 382**
**GB-A- 663 178**
**NL-A-6 906 868**
**NL-A-6 915 975**

(73) Proprietor: **N.V. Philips' Gloeilampenfabrieken**
**Groenewoudseweg 1**
**NL-5621 BA Eindhoven (NL)**

(72) Inventor: **van de Griend, Jan Maarten**
**c/o INT. OCTROOIBUREAU B.V. Prof. Holstlaan 6**
**NL-5656 AA Eindhoven (NL)**

(74) Representative: **Melio, Jan Dirk et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a first method of securing a first part to a second part made of an electrically conductive material, a connecting means made of an electrically conductive material being arranged in the first part and subsequently being welded to the second part.

Such a method is known from, for example, Netherlands Patent Specification No. 70987. This method employes connecting means of a special shape, which moreover have to be brought into a well-defined position relative to the parts to be secured to each other.

The invention aims at providing a method which can readily be automated and which employs simple connecting means.

According to the invention the method is characterized in that for the connecting means a metal ball is used, the ball being arranged in an opening in the first part, which is made of a thermoplastic material, and being brought in the opening into contact with the second part, constituting a contact place with a space between the ball and the second part, after which the ball is welded to the second part by means of an electrode and during welding of the ball to the second part heat is developed which causes the first part to melt in the region of the ball and at least partially fill said space.

The ball forms a fixing means which as a result of its shape does not have a preferred position. The supply of a ball to and its insertion into the opening in the first part can therefore be readily mechanized, so that the method in accordance with the invention is very suitable for mass-production.

That part of the thermoplastic material which is weak in consequence of the heat developed during the welding at least partially fills the space between the ball and the second part under the influence of gravity so that after cooling the first part is secured to the second part.

The invention also relates to a second method of securing a first part to a second part made of an electrically conductive material, a connecting means made of an electrically conductive material being welded to the second part.

According to the invention this method is characterized in that for the connecting means a metal ball is employed, which ball is brought into contact with the second part and is welded thereto by means of an electrode, creating a space between the ball and the second part, after which the first part, which is made of a plastic material and has an opening provided with a constriction, is fitted by sliding the ball into said opening to pass beyond said constriction so that the constriction becomes situated in said space.

Preferably, the opening in the first part is provided with a constriction which is formed by a circumferential rim which projects into the opening or by one or more protrusions which project into the opening. When the first part is fitted the ball passes for the greater part beyond the constriction so that a sort of snap-connection is formed between the first part and the ball.

This method is also very suitable for mass-production and has the additional advantage that it is not necessary for the material of the first part to the specific plasticizing properties. The first part may therefore be a part made of a thermosetting plastics or a thermoplastic material. An embodiment of this method is characterized in that the said constriction is shaped as a circumferential rim and that before the fitting of the first part a continuous groove is formed in the first part, concentrically with said rim.

Both methods may be used in various fields in the mechanical engineering and electrical engineering industries, in particular in those cases where for example a plastics part is to be secured permanently to a metal part. Fields in which the invention may be used are for example: the manufacture of cars, toys, domestic appliances etc.

It is remarked that the use of welding balls is known *per se* from the DE—A—1 807 382. In that publication is described a method for welding a thin coated metal sheet onto another coated metal sheet from which the coating has been removed at the welding region. Apart from the use of welding balls the known method has no similarity to any of the methods according to the invention.

Embodiments of the invention will now be described in more detail, by way of example with reference to the drawings.

Figure 1 is a sectional view of a rotor of an electric motor of which two parts are connected to each other by one of the methods in accordance with the invention.

Figure 2 is a view of a sector of the rotor shown in Figure 1.

Figure 3 shows two sectional views on an enlarged scale, taken at the location of the ball in different stages of the first method.

Figure 4 is a sectional view on an enlarged scale, taken at the location of the ball in one of the stages of the second method.

Figure 5 is a sectional view, similar to that of Figure 4, in a later stage of the second method.

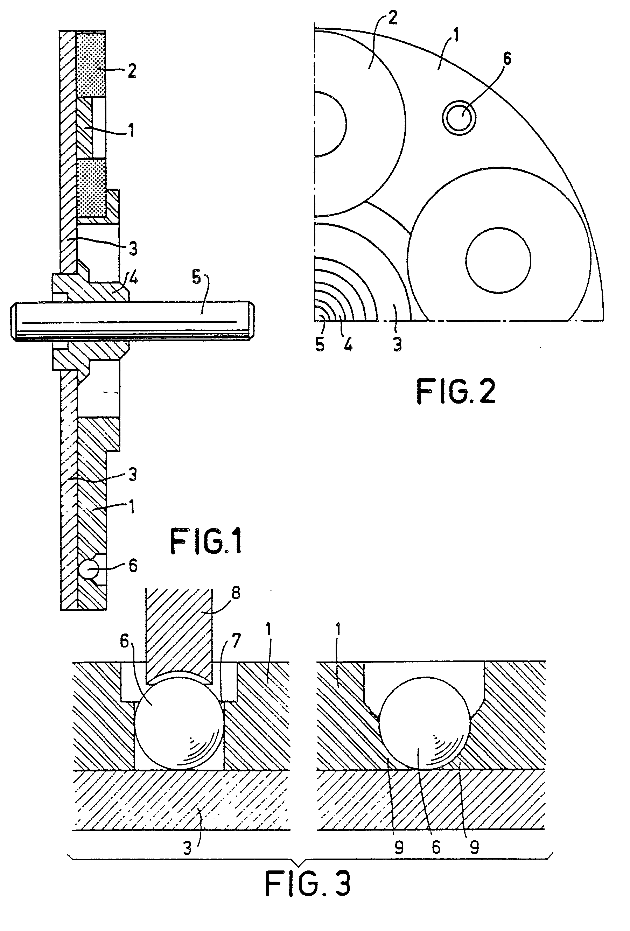

The rotor shown in Figures 1 and 2 comprises a disc 1 of a thermoplastic material, for example a thermoplastic synthetic resin, in which is arranged a plurality of coils 2, which coils are regularly distributed around the disc. *Via* a flange 3 on a hub 4 the disc 1 is mounted on the shaft 5 of the rotor.

For securing the plastics disc 1 to the flange 3, which is made of an electrically conductive material, such as metal, metal balls 6 are used. The disc 1, which in the present case constitutes the first part made of a thermoplastic material, is formed with openings 7 in the form of through-bores in the disc. A ball 6 is inserted into an opening 7 and is brought therein into contact with the second part, constituted by the flange 3. Subsequently, the ball 6 is brought into contact with the electrode 8 of a welding apparatus, known per se (see the left-hand half of Figure 3). The flange 3 is connected into the electric circuit of the welding apparatus with a polarity opposite to that of the electrode 8, the ball 6 being welded to the flange 3. Since the disc 1 is made of a thermoplastic material the heat developed during welding causes the thermoplastic material of the disc 1 in the region of the ball 6 to melt and at least partly fill the space 9 between the ball 6 and the flange 3 (see the right-hand half of Figure 3). As a result of this and of the adhesion of the material of the disc 1 to the ball 6 and the flange 3 a firm fixture of the disc 1 to the flange 3 is obtained.

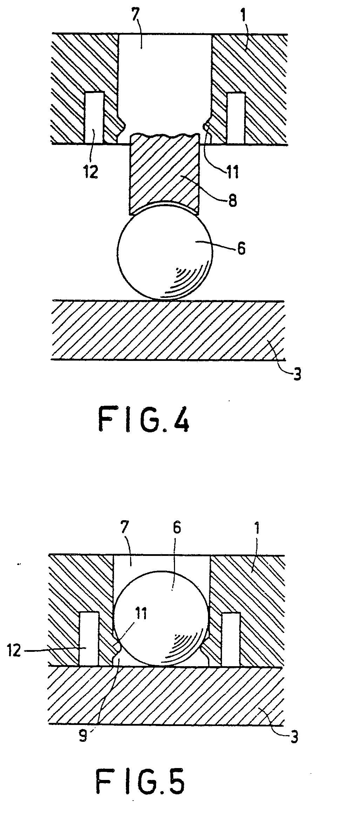

The second method of securing the disc 1 to the flange 3 will now be described with reference to Figures 4 and 5. A ball 6 is brought into contact with the flange 3. Subsequently, the flange 3 is connected into an electric circuit of a welding apparatus with a polarity opposite to that of the electrode 8, so that the wall 6 is welded to the flange 3. After this the electrode 8 is removed and the disc 1 is pressed onto the flange 3 (see Figure 5), the ball 6 sliding into the opening 7 past a circumferential rim 11. In the final stage the rim 11 is situated in the space 9 between the ball 6 and the flange 3, which ensures a firm fixture of the disc 1 to the ball 6 and the flange 3. In order to facilitate mounting of the disc 1 this disc is provided with a continuous groove 12 in the present example.

### Claims

1. A method of securing a first part to a second part made of an electrically conductive material, a connecting means made of an electrically conductive material being arranged in the first part and subsequently being welded to the second part, characterized in that for the connecting means a metal ball is used, the ball being arranged in an opening in the first part, which is made of a thermoplastic material, and being brought in the opening into contact with the second part, constituting a contact place with a space between the ball and the second part, after which the ball is welded to the second part by means of an electrode and during welding of the ball to the second part heat is developed which causes the first part to melt in the region of the ball and at least partially fill said space.

2. A method of securing a first part to a second part made of an electrically conductive material, a connecting means made of an electrically conductive material being welded to the second part, characterized in that for the connecting means a metal ball is employed, which ball is brought into contact with the second part and is welded thereto by means of an electrode, creating a space between the ball and the second part, after which the first part, which is made of a plastic material and has an opening provided with a constriction, is fitted by sliding the ball into said opening to pass beyond said constriction so that the constriction becomes situated in said space.

3. A method as claimed in claim 2, characterized in that the said constriction is shaped as a circumferential rim and that before the fitting of the first part a continuous groove is formed in the first part concentrically with said rim.

### Patentansprüche

1. Verfahren zum Befestigen eines ersten Teiles an einem aus einem elektrisch leitenden Material hergestellten zweiten Teil, wobei ein Verbindungsmittel aus einem elektrisch leitenden Material im ersten Teil angeordnet und darauf mit dem zweiten Teil verschweisst wird, dadurch gekennzeichnet, dass als Verbindungsmittel eine Metallkugel verwendet wird, die in einer Öffnung in dem aus einem thermoplastischen Material hergestellten ersten Teil angeordnet und in der Öffnung mit dem zweiten Teil in Berührung gebracht wird, wodurch sich eine Kontaktstelle mit einem Raum zwischen der Kugel und dem zweiten Teil bildet, wonach die Kugel mit dem zweiten Teil mit Hilfe einer Elektrode verschweisst wird und beim verschweissen des Kugels mit dem zweiten Teil sich Hitze entwickelt, die das Schmelzen des ersten Teils im Bereich der Kugel verursacht und zumindest teilweise diesen Raum ausfüllt.

2. Verfahren zum Befestigen eines ersten Teils an einem zweiten Teil aus einem elektrisch leitenden Material, wobei ein Verbindungsmittel auf einem elektrisch leitenden Material mit dem zweiten Teil verschweisst wird, dadurch gekennzeichnet, dass als Verbindungsmittel eine Metallkugel verwendet wird, die mit dem zweiten Teil in Berührung gebracht und damit über eine Elektrode verschweisst wird, wodurch sich ein Raum zwischen der Kugel und dem zweiten Teil bildet, wonach der erste Teil aus einem Kunststoff mit einer Öffnung, die eine Einengang aufweist, dadurch fixiert wird, dass die Kugel in die genannte Öffnung gleitet und die genannte Einengang passiert, so dass sich diese Einengang weiterhin im genannten Raum gefindet.

3. Verfahren nach Anspruch 2, dadurch gekennzeichnet, dass die genannte Einengang als Umfangsrand geformt ist und dass vor der Fixierung des ersten Teiles in diesem ersten Teil eine durchgehende Rille konzentrisch mit dem genannten Rand gebildet wird.

### Revendications

1. Procédé de fixation d'une première pièce à une seconde pièce en matériau conducteur de l'électricité, suivant lequel un moyen de fixation en matériau conducteur de l'électricité est placé dans la première pièce et est ensuite soudé à la seconde pièce, caractérisé en ce que, comme moyen de fixation, on utilise une bille métallique qui est placée dans une ouverture pratiquée dans la première pièce, faite en matière thermoplastique, et qui, dans cette ouverture, est amenée en contact avec la seconde partie, de sorte qu'entre la bille et la seconde pièce, est créé en endroit de contact avec un espace, après quoi la bille est soudée à la seconde pièce au moyen d'une électrode, alors que durant le soudage de la bille à la seconde pièce, est dégagée de la chaleur sous l'effet de laquelle la première pièce se fond au niveau de la bille et remplit au moins partiellement ledit espace.

2. Procédé de fixation d'une première pièce à une seconde pièce en matériau conducteur de l'électricité, un moyen de fixation en matériau conducteur de l'électricité étant soudé à la seconde pièce, caractérisé en ce que, comme moyen de fixation, on utilise une bille métallique qui est mise en contact avec la seconde pièce et est soudée à celle-ci au moyen d'une électrode, de sorte qu'un espace est créé entre la bille et la second pièce, après quoi la première pièce, faite en matière plastique et présentant une ouverture munie d'un étranglement, est fixée en glissant la bille dans ladite ouverture jusqu'au-delà dudit étranglement, de sorte que l'étranglement vient se situer dans ledit espace.

3. Procédé selon la revendication 2, caractérisé en ce que ledit étranglement est formé par un bord périphérique et en ce que, avant la fixation de la première pièce, une gorge continue est pratiquée dans la première pièce, gorge qui est concentrique avec ledit bord.

FIG.1

FIG.2

FIG. 3

FIG.4

FIG.5

2